# EUROPÄISCHE PATENTSCHRIFT

(11) **EP 3 541 692 B1**
(45) Veröffentlichungstag und Bekanntmachung des Hinweises auf die Patenterteilung: **19.05.2021**
(21) Anmeldenummer: 17797649.5
(22) Anmeldetag: 14.11.2017
(51) Int. Cl.: B23K 11/11, B23K 31/02, B23K 37/047, B23K 101/00, B62D 65/02, B62D 65/18, B23K 37/04

(54) **FÜGEANLAGE MIT EINER FÜGESTATION UND SPANNRAHMEN**
JOINING PLANT COMPRISING A JOINING STATION AND CLAMPING FRAMES
INSTALLATION D'ASSEMBLAGE ÉQUIPÉE D'UN POSTE D'ASSEMBLAGE ET CADRE DE SERRAGE

(30) Priorität: 15.11.2016 AT 510342016
(43) Veröffentlichungstag der Anmeldung: 25.09.2019
(73) Patentinhaber: TMS Turnkey Manufacturing Solutions GmbH, 4031 Linz (AT); Dr.Ing. H.C. F. Porsche Aktiengesellschaft, 70435 Stuttgart (DE)
(72) Erfinder: HOLZER, Erwin, 4311 Schwertberg (AT); MAYRHOFER, Christoph, 4141 Pfarrkirchen (AT); MALZNER, Roland, 4531 Kematen an der Krems (AT); MILDENBERGER, Jürgen, 76307 Karlsbad (DE)
(74) Vertreter: Patentanwälte Pinter & Weiss OG
(86) Internationale Anmeldenummer: PCT/EP2017/079169
(87) Internationale Veröffentlichungsnummer: WO 2018/091452

(56) Entgegenhaltungen:
- EP-A1- 0 927 598
- EP-A1- 3 075 637
- EP-A2- 0 642 878
- EP-A2- 1 352 818
- EP-B1- 1 611 991
- EP-B1- 2 279 929
- US-A1- 2003 115 746

## Beschreibung

Die gegenständliche Erfindung betrifft eine Fügeanlage mit einer Fügestation, in der in Längsrichtung gesehen an zumindest einer Seite eine Spannrahmeneinheit angeordnet ist, die einen Spannrahmen umfasst, wobei die Spannrahmeneinheit auf einer in Längsrichtung bewegbaren Spannrahmen-Transporteinheit angeordnet ist und die Spannrahmeneinheit auf der Spannrahmen-Transporteinheit in Querrichtung und relativ zur Spannrahmen-Transporteinheit zwischen einer Arbeitsposition und einer Bereitschaftsposition bewegbar angeordnet. Außerdem betrifft die Erfindung eine Spannrahmen-Transporteinheit zur Verwendung in der erfindungsgemäßen Fügeanlage.

Fahrzeugkarosserien werden üblicherweise in Fügestationen einer Fügeanlage hergestellt. Darin wird oftmals eine Bodenbaugruppe der Fahrzeugkarosserie mit Seitenbaugruppen der Fahrzeugkarosserie durch eine Fügeverbindung verbunden. Gleichfalls kann, gleichzeitig oder in einem separaten Arbeitsschritt, eine Dachbaugruppe mit den anderen Baugruppen verbunden werden. Die Baugruppen sind entweder einzelne Bauteile der Fahrzeugkarosserie oder eine schon vorgefügte oder provisorisch verbundene Kombination einzelner Bauteile der Fahrzeugkarosserie. Als Fügeverfahren kommen typischerweise Schweißen, Löten, Nieten, Crimpen, Schrauben, Kleben, etc. zur Anwendung. Um die einzelnen Baugruppen fügen zu können, müssen die Baugruppen in einer Fügestation relativ zueinander genau ausgerichtet werden und in der ausgerichteten Lage verspannt werden. Dazu werden in der Regel sogenannte Spannrahmen verwendet, an denen Einrichtungen zum Halten, Positionieren und Spannen der Baugruppen angeordnet sind. In modernen Fügeanlage für Fahrzeugkarosserien werden verschiedene Typen von Fahrzeugkarosserien gefertigt. Das bedingt natürlich unterschiedliche, an die unterschiedlichen Typen von Baugruppen angepasste Spannrahmen oder Spannrahmenaufbauten, die in der Fügestation bedarfsweise gewechselt werden müssen. Eine derartige Fügeanlage wird daher zur Fertigung verschiedener Fahrzeugkarosserien verwendet. In flexiblen Fügeanlagen können in der Fügestation folglich hintereinander verschiedene Typen von Fahrzeugkarosserie gefügt werden, indem die jeweils benötigten Spannrahmen in der Fügestation bedarfsweise getauscht werden. Das Tauschen der Spannrahmen soll dabei natürlich möglichst rasch und einfach erfolgen und die Fügeanlage soll eine möglichst hohe Flexibilität, beispielsweise in der Anzahl der möglichen verschiedenen Typen an Fahrzeugkarosserien, ermöglichen. Hierfür sind verschiedene Ansätze bekannt.

Für den taktweisen Betrieb der Fügestation ist es auch erforderlich, dass der Spannrahmen zwischen einer Arbeitsposition, in der gefügt wird, und einer Bereitschaftsposition, in der eine gefügte Fahrzeugkarosserie abtransportiert werden und eine neu zu fügende Fahrzeugkarosserie in die Fügestation gefördert werden kann, hin und her bewegt werden kann. Diese Bewegung soll möglichst einfach realisiert werden. Zusätzlich soll der Spannrahmen in der Fügestation trotz dieser notwendigen Bewegung genau positionierbar sein, um eine hohe Fertigungsgenauigkeit zu erreichen.

Die EP 1 611 991 B1 oder die EP 2 279 929 B1 beschreibt eine flexible Fügeanlage, in der verschiedene Spannrahmen in Magazinen gespeichert sind und bedarfsweise getauscht werden. Dazu sind längs der Fügeanlage Führungsschienen angeordnet, auf denen Längsschlitten in Längsrichtung bewegbar geführt sind. Auf den Längsschlitten sind die Spannrahmen angeordnet. Der Längsschlitten kann zwischen der Fügestation und einer Magazinposition in Längsrichtung bewegt werden. In der Fügestation kann der Spannrahmen in eine Arbeitsposition quer zur Längsrichtung bewegt werden. Für diese Querbewegung wird ein gesamter Abschnitt der Führungsschiene mit dem Längsschlitten und dem Spannrahmen quer zur Längsrichtung verschoben. Auch zum Austausch der Spannrahmen kann der Längsschlitten mit einem Abschnitt der Führungsschiene quer zur Längsrichtung verschoben werden. Damit wird zwar eine flexible Fügeanlage realisiert, die jedoch sehr viel Platz benötigt. Insbesondere muss der gesamte Bereich, in dem die Längsschlitten mit den Führungsschienen bewegt wird freigehalten werden, wodurch sehr viel Bodenbereich beansprucht wird. Außerdem ist die Bewegung der Abschnitte der Führungsschienen aufwendig und bedarf aufgrund des hohen Gewichts auch starker Antriebe.

In der EP 968 073 B1 wird ein Spannrahmenwechsel durch eine Portalkonstruktion gelöst. An der Portalkonstruktion ist ein Portalroboter beweglich angeordnet. Der Portalroboter kann zwischen einem Spannrahmenmagazin und der Fügestation bewegt werden. Zum Spannrahmenwechsel wird ein Spannrahmen durch den Portalroboter nach oben aus der Fügestation herausgehoben, an einer freien Magazinposition abgelegt und ein neuer Spannrahmen mit dem Portalroboter ergriffen. Auch zum Einlegen der Karosseriebaugruppe in den Spannrahmen muss der Spannrahmen mit dem Portalroboter an eine Einlegeposition abseits der Fügestation gebracht werden. Das ermöglicht zwar eine hohe Flexibilität, bedingt aber oftmalige und weite Wege des Portalroboters, was die Taktzeiten in der Fügeanlage reduziert. Abgesehen davon ist die Bauhöhe der Fügeanlage sehr hoch, wodurch auch eine entsprechend hohe Fertigungshalle benötigt wird.

Die DE 199 14 125 A1 beschreibt eine Fügeanlage mit einer Fügestation. In die Fügestation wird ein Fahrzeugkörper mit einer Bodenbaugruppe und daran angeordneten vorfixierten Seitenteilen gefördert. In der Fügestation werden die Bodenbaugruppe und die Seitenteile gefügt. Hierfür sind in der Fügestation Spannrahmen vorgesehen, die auf einer verfahrbaren Linearführung zwischen einer Fügeposition und einer Wechselposition quer zur Längsrichtung bewegbar sind. In der Fügeanlage sind an einer Portalkonstruktion oberhalb der Fügestation verschiedene Spannrahmen gespeichert. Zum Wechsel der Spannrahmen wird ein Spannrahmen nach oben weggehoben und ein anderer Spannrahmen in die Linearführung abgesenkt. Auch hier ist die Bauhöhe der Fügeanlage sehr hoch, wodurch auch eine entsprechend hohe Fertigungshalle benötigt wird.

Der EP 2 186 598 B1 kann eine Fügeanlage entnommen werden mit Spannrahmen, die auf Längsschlitten in Längsrichtung verfahren sind. Im Bereich einer Fügestation ist ein Antrieb angeordnet, der in den Spannrahmen einkoppelt und den Spannrahmen quer zur Längsrichtung verschieben kann, um den Spannrahmen aus einer Bereitschaftsposition in eine Arbeitsposition zu bewegen. Zum Wechseln des Spannrahmens wird der Längsschlitten aus dem Bereich der Fügestation in eine Ruheposition gefahren und ein anderer Längsschlitten mit einem anderen Spannrahmen in die Bereitschaftsposition gefahren. Auf diese Weise lassen sich zwei verschiedene Typen von Fahrzeugkarosserien fertigen, wodurch die Flexibilität eingeschränkt ist. Außerdem muss der Spannrahmen während des Transports von der Bereitschaftsposition in die Ruheposition, oder umgekehrt, am Längsschlitten fixiert werden. Diese Fixierung muss in der Bereitschaftsposition wieder gelöst werden, um den Spannrahmen in die Arbeitsposition bewegen zu können. Das wird in der EP 2 186 598 B1 durch eine automatische, mechanische und bewegungsgesteuerte Verriegelung bewirkt. Durch diesen automatischen Verriegelungsmechanismus kann der Steuerungsaufwand reduziert werden, stellt aber einen zusätzlichen mechanischen Verschleiß- und Wartungsteil dar. Bei einer Störung des externen Antriebs oder der Entkopplung oder Verriegelung wird die gesamte Anlage zwangsweise stillgesetzt, was einen Fertigungsausfall darstellt.

In der EP 2 186 598 B1 sind an den Spannrahmen Querträger angeordnet, die in der Arbeitsposition mit den Querträgern eines Spannrahmens auf der anderen Seite verspannt werden, um einen schubsteifen Rahmenverbund zu erhalten. Die bis zur Hälfte der Fügestation reichenden Querträger machen den Spannrahmen schwerer, größer und unhandlicher. Außerdem werden dadurch konkurrierende Toleranzstellen verursacht, da die Positionierung der Spannrahmen in der Fügestation genau erfolgen muss, aber auch die Querträger genau positioniert werden müssen, um miteinander verspannt werden zu können. Das erhöht den konstruktiven und fertigungstechnischen Aufwand für die Fügeanlage.

Die Genauigkeit der Positionierung der Spannrahmen in einer Arbeitsposition in der Fügestation ist wichtig für einen exakten Fügevorgang und damit auch für die erreichbare Fertigungstoleranz der gefügten Fahrzeugkarosserien. Dazu muss der Spannrahmen auch ausreichend steif sein und auch ausreichend stabil und sicher in der Fügestation angeordnet werden.

Dazu ist es aus der EP 2 123 390 B1 schon bekannt, die Spannrahmen mittels Positioniereinrichtungen an Säulen des Karosserieträgers zu fixieren, um eine exakte Positionierung des Spannrahmens relativ zum Karosserieträger zu erzielen. Dazu muss der Karosserieträger in der EP 2 123 390 B1 aber in Längs- und Querrichtung schwimmend gelagert sein, was die Konstruktion aufwendiger macht.

Weitere Beispiele von Fügeanlagen für Fahrzeug-Karosserien sind in der EP 1 352 818 A2 und der US 2003/0115746 A1 offenbart.

Es ist eine Aufgabe der Erfindung eine Fügeanlage anzugeben, die ein einfaches Hantieren des Spannrahmens in der Fügestation ermöglicht. Außerdem ist es eine Aufgabe eine Spannrahmen-Transporteinheit hierfür anzugeben.

Diese Aufgabe wird dadurch gelöst, indem auf der Spannrahmen-Transporteinheit ein Zustellantrieb vorgesehen ist, der die Spannrahmeneinheit (mit dem Spannrahmen) zwischen der Arbeitsposition und der Bereitschaftsposition bewegt, wobei an der Spannrahmen-Transporteinheit eine erste Führungseinrichtung zum Führen der Spannrahmeneinheit in Querrichtung vorgesehen ist und in der Fügestation eine ortsfeste zweite Führungseinrichtung zum Führen der Spannrahmeneinheit in Querrichtung vorgesehen ist, wobei die Spannrahmeneinheit in der Arbeitsposition ausschließlich in der zweiten Führungseinrichtung geführt ist. Damit ist die Spannrahmen-Transporteinheit eine abgeschlossene Einheit, die keine zusätzlichen externen Hilfsmittel oder Antriebe benötigt, um den Spannrahmen in eine Arbeitsposition, oder von dieser weg, zu bringen. Im Falle einer defekten Spannrahmen-Transporteinheit muss nur diese getauscht werden, was rasch erfolgen kann. In der Zwischenzeit kann die Fertigung aber ungestört mit einer anderen Spannrahmen-Transporteinheit weitergehen und es kommt, wenn überhaupt, nur zu sehr kurzen Fertigungsstillständen. Durch die erste und zweite Führungseinrichtung kann die Genauigkeit der Positionierung des Spannrahmens in der Fügestation erhöht werden. In der Arbeitsposition ist damit die Geometrie und die Position von der ersten Führungseinrichtung an der Spannrahmen-Transporteinheit entkoppelt, womit die Positionierung weiter von möglichen toleranzund verschleißbedingten Abweichungen der einzelnen Spannrahmen-Transporteinheiten unabhängig gemacht wird. Geometriebestimmend ist damit die zweite Führungseinrichtung in der Fügestation, die im Wesentlichen unabhängig von der ersten Führungseinrichtung der Spannrahmen-Transporteinheit ist.

Der Spannrahmen muss in der Fügestation möglichst exakt positioniert werden, um eine hohe Fertigungsgenauigkeit sicherzustellen. Jede Spannrahmen-Transporteinheit unterliegt aber Toleranzen und Verschleiß und unterscheidet sich daher geringfügig von anderen Spannrahmen-Transporteinheiten. Um diesen Einfluss auf die Positionierung möglichst gering zu halten, ist in der Fügestation zumindest eine Verriegelungseinheit angeordnet ist, die mit einem Gegenverriegelungsteil an der Spannrahmeneinheit zur positionsgenauen Fixierung des Spannrahmens in der Arbeitsposition zusammenwirkt. Damit ist die in der Fügestation angeordnete Verriegelungseinheit geometriebestimmend für die Positionierung und die Positionierung kann von Abweichungen der einzelnen Spannrahmen-Transporteinheiten weitestgehend unabhängig gemacht werden.

Besonders vorteilhaft umfasst die Spannrahmeneinheit einen Spannrahmenträger, auf dem der Spannrahmen lösbar angeordnet ist. Damit kann ein einheitlicher Spannrahmenträger verwendet werden, auf dem verschiedene Spannrahmen angeordnet werden können. Ferner wird dadurch der Spannrahmenwechsel erleichtert. Damit wird auch die Fügeanlage flexibler.

Zur einfachen, aber positionsgenauen Positionierung kann am Spannrahmenträger zumindest eine Zentriersäule angeordnet sein und am Spannrahmen zumindest eine Zentrierausnehmung vorgesehen ist, wobei die Zentriersäule in die Zentrierausnehmung eingreift. Dazu ist auch vorteilhafterweise eine Spannrahmen-Verriegelungseinheit vorgesehen ist, die den Spannrahmen lösbar am Spannrahmenträger fixiert. Mit der Spannrahmen-Verriegelungseinheit kann der Spannrahmen auch während der Bewegung der Spannrahmen-Transporteinheit sicher und positionsgenau am Spannrahmenträger gehalten werden.

Wenn an beiden Seiten der Fügestation eine Spannrahmen-Transporteinheit mit einer Spannrahmeneinheit mit Spannrahmen vorgesehen ist, ist unterhalb der Fügestation vorteilhafterweise eine ortsfeste Basiskonstruktion angeordnet, an der beiden Seiten je zumindest eine Verriegelungseinheit vorgesehen ist, die den Spannrahmen der jeweiligen Seite in der Arbeitsposition positionsgenau fixiert. Durch die durchgehende ortsfeste Konstruktion wird eine steife Basiskonstruktion geschaffen, die die Steifigkeit der Fügestation mit den Spannrahmen in der Arbeitsposition erhöht. Auch das verbessert die Fertigungsgenauigkeit in der Fügestation.

Für einen flexiblen Betrieb der Fügeanlage ist in der Fügeanlage zumindest ein Spannrahmenmagazin für eine Spannrahmeneinheit oder einen Spannrahmen vorgesehen, wobei in der Fügeanlage eine Portalkonstruktion mit einem daran beweglich angeordneten Portalmanipulator angeordnet ist und mit dem Portalmanipulator zum Spannrahmenwechsel eine Spannrahmeneinheit oder ein Spannrahmen zwischen dem Spannrahmenmagazin und einer Spannrahmen-Transporteinheit bewegbar ist. Die Portalkonstruktion wird im Wesentlichen nur für den Spannrahmentransport benötigt und muss daher nicht höher bauen, als die Höhe der Fügestation. Die Bauhöhe der Fügeanlage kann damit niedrig gehalten werden, was auch die Anforderungen an die Fertigungshalle, in der die Fügeanlage aufgebaut ist, reduziert.

Mit einer Wechselposition kann ein Spannrahmen abseits der Fügestation an einer Spannrahmen-Transporteinheit gewechselt werden, während in der Fügestation ein anderer Spannrahmen im Einsatz ist. Das erhöht die Flexibilität und reduziert die Taktzeit der Fertigung. Dazu ist die Spannrahmen-Transporteinheit vorteilhafterweise zwischen der Bereitschaftsposition und einer Wechselposition bewegbar und der Portalmanipulator bewegt die Spannrahmeneinheit oder den Spannrahmen zwischen dem Spannrahmenmagazin und der Wechselposition.

Die gegenständliche Erfindung wird nachfolgend unter Bezugnahme auf die Figuren 1 bis 11 näher erläutert, die beispielhaft, schematisch und nicht einschränkend vorteilhafte Ausgestaltungen der Erfindung zeigen. Dabei zeigt
Fig.1 eine erfindungsgemäße Fügeanlage mit einer erfindungsgemäßen Spannrahmen-Transporteinheit,
Fig.2 eine Ansicht der Spannrahmen-Transporteinheit mit Spannrahmenträger ohne Spannrahmen und mit Zustellantrieb,
Fig.3 eine Ansicht der Spannrahmen-Transporteinheit mit Spannrahmenträger mit Spannrahmen und mit Zustellantrieb,
Fig.4 eine Detailansicht der Positionierung des Spannrahmens am Spannrahmenträger,
Fig.5 und 6 Ansichten der Führung der Spannrahmeneinheit zwischen der Bereitschaftsposition und der Arbeitsposition,
Fig.7 und 8 Ansichten der erfindungsgemäßen Versteifungseinheit,
Fig.9 eine erfindungsgemäße Fügeanlage mit einer Portalkonstruktion zum Spannrahmenwechsel,
Fig.10 eine Seitenansicht der Fügeanlage mit einer Portalkonstruktion und
Fig.11 eine erfindungsgemäße Fügeanlage mit einer Portalkonstruktion zum Spannrahmenwechsel.

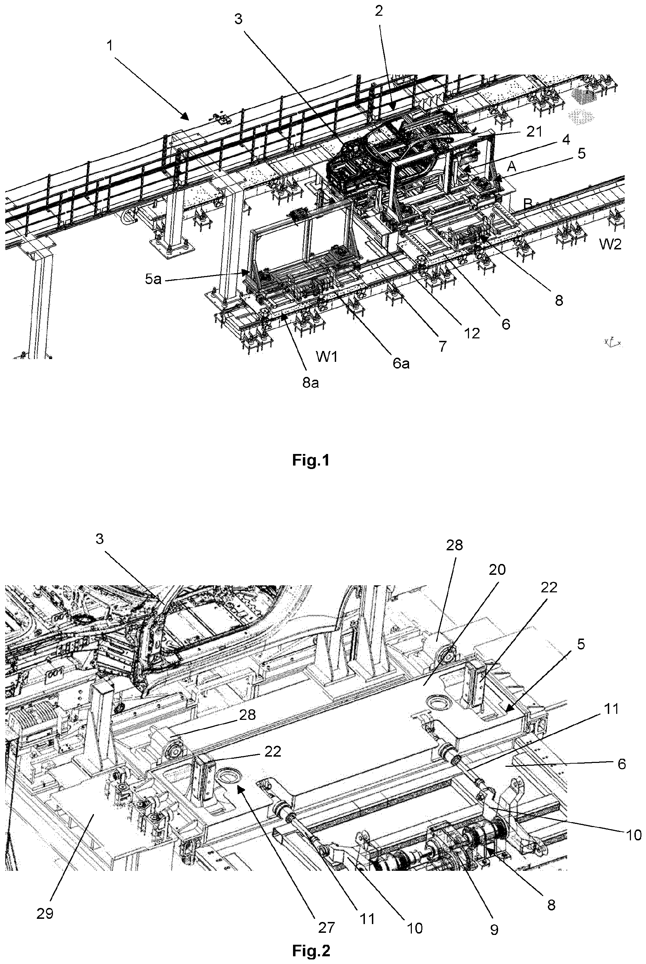

Fig.1 zeigt eine Fügeanlage 1 mit einer Fügestation 2, in der Fahrzeugkarosserien 3 gefügt werden. Die vorfixierte Fahrzeugkarosserie 3, beispielsweise in Form einer Bodenbaugruppe und zumindest einer daran fixierten Seitenbaugruppe, ist beispielswiese auf einem angetriebenen Transportschlitten 4 angeordnet und kann mit dem Transportschlitten 4 in Längsrichtung (x-Richtung) durch die Fügeanlage 1 bewegt werden. Dazu können in der Fügeanlage 1 geeignete Transport- oder Fördereinrichtungen vorgesehen sein, entlang der der Transportschlitten 4 bewegt werden kann. Solche Transport- oder Fördereinrichtungen und Antriebe für den Transportschlitten 4 sind hinlänglich bekannt und sind aus Gründen der Übersichtlichkeit nicht dargestellt.

In Längsrichtung gesehen an zumindest einer Seite der Fügestation 2 ist eine Spannrahmeneinheit 5 vorgesehen, an der hinlänglich bekannte Spanneinrichtungen und/oder Positioniereinrichtungen angeordnet sind, um die Karosserieteile der Fahrzeugkarosserie 3 in der Fügestation 2 zum Fügen zu positionieren und zu spannen. Auch diese sind aus Gründen der Übersichtlichkeit nicht näher dargestellt. Das Fügen erfolgt in bekannter Weise oftmals mittels Roboter, die im Bereich der Fügestation 2 angeordnet sind und die Fügewerkzeuge, wie beispielsweise eine Schweißzange zum Punktschweißen, eine Löteinrichtung, ein Crimpwerkzeug, oder eine Schraubeinrichtung, usw., tragen. Es wäre auch denkbar, direkt an der Spannrahmeneinheit 5 ein Fügewerkzeug anzuordnen. Die Versorgung der Spannrahmeneinheit 5 mit benötigter Energie und benötigten Medien zum Betätigen der Spannrichtungen, Positioniereinrichtungen und/oder Fügewerkzeuge kann in hinlänglich bekannter Weise durch zusammenwirkende Medienkupplungen in der Fügestation 2 und an der Spannrahmeneinheit 5 erfolgen. Durch Positionieren der Spannrahmeneinheit 5 in der Arbeitsposition A kann in hinlänglich bekannter Weise automatisch eine Verbindung der Medienkupplungen erfolgen. Auch das ist aus Gründen der Übersichtlichkeit nicht dargestellt.

Die Spannrahmeneinheit 5 kann in der Fügestation 2 zwischen einer Arbeitsposition A und einer Bereitschaftsposition B in Querrichtung (y-Richtung), also quer zur Längsrichtung, bewegt werden. In Fig.1 ist die Spannrahmeneinheit 5 in der Arbeitsposition A dargestellt. In der Arbeitsposition A sind die Spanneinrichtungen und/oder Positioniereinrichtungen der Spannrahmeneinheit 5 für den Fügevorgang im Eingriff mit den zugeordneten Karosserieteilen der Fahrzeugkarosserie 3 und positionieren und spannen die Karosserieteile der Fahrzeugkarosserie 3. In der Bereitschaftsposition B ist die Spannrahmeneinheit 5 in Querrichtung ein Stück von der Arbeitsposition A in Richtung von der Fahrzeugkarosserie 3 weg zurückgefahren. Wenn sich die Spannrahmeneinheit 5 in der Bereitschaftsposition B befindet, kann eine fertig gefügte Fahrzeugkarosserie 3 aus der Fügestation 2 herausbewegt werden und eine weitere zu fügende Fahrzeugkarosserie 3 in die Fügestation 2 hineinbewegt werden. In der Bereitschaftsposition B könnte aber auch eine Seitenteilbaugruppe, und/oder anderer Karosserieteile, mittels geeigneter Fördertechnik, oder auch manuell, in die Spannrahmeneinheit 5 eingelegt und gehalten werden und so zu einer Bodenbaugruppe in der Fügestation 2 zugestellt werden. Eine Seitenteilbaugruppe und/oder ein anderer Karosserieteil könnte dabei aber auch an einer Bodenbaugruppe in der Fügestation 2 vorfixiert werden. Ebenso ist es denkbar, eine Bodenbaugruppe nicht mit einem Transportschlitten 4 zuzuführen, sondern durch eine geeignete Fördertechnik in die Fügestation 2 zu transportieren und dort auf einer ortsfest angeordneten Bodenspanneinrichtung abzulegen und zu halten. Es ist also nicht zwingend erforderlich, dass die Fahrzeugkarosserie 3 vorfixiert in die Fügestation 2 gefördert wird.

Die Spannrahmeneinheit 5 ist auf einer Spannrahmen-Transporteinheit 6 angeordnet, die in der Fügeanlage 1, zumindest im Bereich der Förderstation 2, in Längsrichtung bewegbar angeordnet ist. In der Fügeanlage 1 kann dazu beispielsweise eine geeignete in der Fügeanlage 1 ortsfeste Führungskonstruktion 7 vorgesehen sein, auf der die Spannrahmen-Transporteinheit 6 geführt wird und entlang der die Spannrahmen-Transporteinheit 6 bewegt werden kann. Die Spannrahmen-Transporteinheit 6 kann dazu einen Längsantrieb (aus Gründen der Übersichtlichkeit nicht dargestellt) aufweisen, mit dem die Spannrahmen-Transporteinheit 6 in Längsrichtung bewegt wird. Alternativ könnte auch ein externer Längsantrieb, beispielsweise an der Führungskonstruktion 7, vorgesehen sein, um die Spannrahmen-Transporteinheit 6 in Längsrichtung zu bewegen. Mittels der Spannrahmen-Transporteinheit 6 kann die Spannrahmeneinheit 5 aus dem Bereich der Fügestation 2 wegbewegt werden, beispielsweise um die Spannrahmeneinheit 5 abseits der Fügestation 2 in einer Wechselposition W1, W2 zu warten.

Auf der Spannrahmen-Transporteinheit 6 ist ein Zustellantrieb 8 angeordnet, mit dem die Spannrahmeneinheit 5 in Querrichtung relativ zur Spannrahmen-Transporteinheit 6, konkret zwischen der Arbeitsposition A und der Bereitschaftsposition B, hin und her bewegt werden kann. Der Zustellantrieb 8 ist beispielsweise als Kurbelschwinge 10 ausgeführt, die von einem Elektromotor 9 angetrieben wird und an der ein Ende einer Schubstange 11 angelenkt ist (Fig.2). Das andere Ende der Schubstange 11 ist an der Spannrahmeneinheit 5 angelenkt. Die Drehbewegung des Elektromotors 9 wird damit in eine translatorische Bewegung der Schubstange 11 in Querrichtung umgesetzt, um die Spannrahmeneinheit 5 zwischen der Arbeitsposition A und der Bereitschaftsposition B hin und her zu bewegen. Der Zustellantrieb 8 kann natürlich auch beliebig anders ausgeführt sein, insbesondere auch hydraulisch oder pneumatisch, wobei die Spannrahmeneinheit 5 auch in der Arbeitsposition A vorzugsweise an den Zustellantrieb 8 angekoppelt bleibt. Ebenso bleibt die Spannrahmeneinheit 5 in der Bereitschaftsposition B an den Zustellantrieb 8 angekoppelt, womit der Zustellantrieb 8 gleichzeitig auch dafür sorgt, dass die Spannrahmeneinheit 5 auch bei einer Längsbewegung der Spannrahmen-Transporteinheit 6 sicher auf dieser gehalten wird. Eine zusätzliche Verriegelung zum Fixieren der Spannrahmeneinheit 5 auf der Spannrahmen-Transporteinheit 6 ist damit nicht erforderlich.

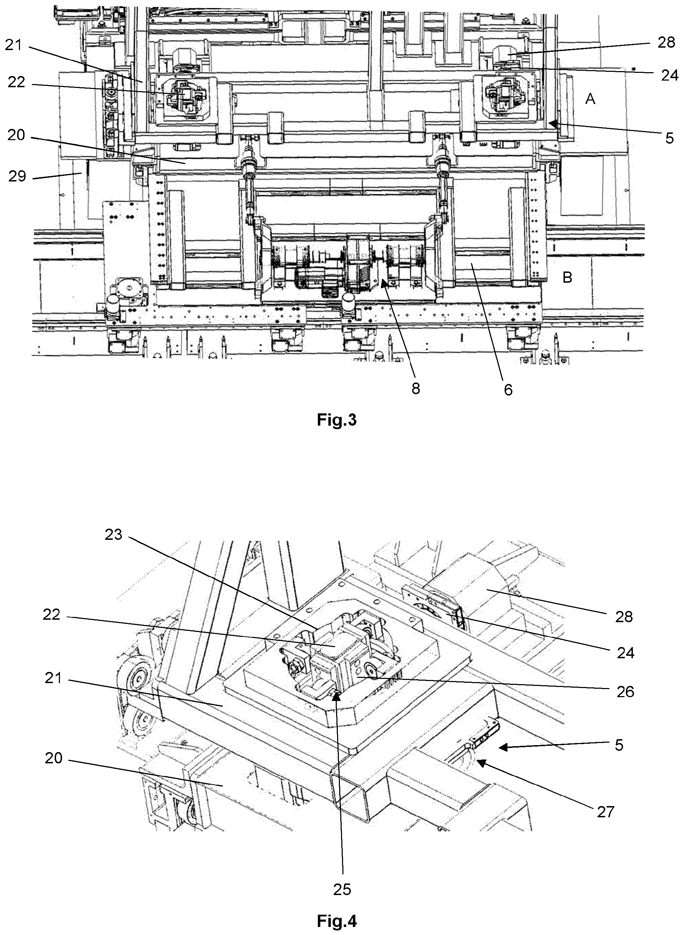

Die Spannrahmeneinheit 5 bildet einen Spannrahmen 21 aus, der sich in der Fügestation 2 in Längsrichtung gesehen seitlich der Fahrzeugkarosserie 3 erstreckt. Die Spannrahmeneinheit 5 ist dazu vorteilhafterweise, aber nicht zwingend, zweiteilig mit einem Spannrahmenträger 20 und einem Spannrahmen 21 ausgeführt, wie mit Bezugnahme auf die Fig.2, 3 und 4 beschrieben wird, wobei der Spannrahmen 21 lösbar am Spannrahmenträger 20 angeordnet ist. Die Spanneinrichtungen, Positioniereinrichtungen und/oder Fügewerkzeuge der Spannrahmeneinheit 5 sind dabei vorzugsweise am Spannrahmen 21 angeordnet. Damit ist es möglich einen einheitlichen Spannrahmenträger 20 zu verwenden, auf dem verschiedene Spannrahmen 21, nicht nur für verschiedene Typen an Fahrzeugkarosserien, sondern auch verschiedener Größen, angeordnet werden können. Das erhöht die Flexibilität und Modularität der Fügeanlage 1. Bei dieser Ausführung greift der Zustellantrieb 8 bevorzugter Weise am Spannrahmenträger 20 an, womit der Spannrahmen 21 noch einfacher gewechselt werden kann.

Am Spannrahmenträger 20 ist zumindest eine Zentriersäule 22 vorgesehen, die mit einer zumindest einer Zentrierausnehmung 23 am Spannrahmen 21 zusammenwirkt, indem die Zentriersäule 22 in die Zentrierausnehmung 23 eingreift und den Spannrahmen 21 damit relativ zum Spannrahmenträger 20 ausrichtet. In der Zentrierausnehmung 23 können dazu auch Zentrierführungen 25, beispielsweise Zentrierrollen, vorgesehen sein, die mit zugeordneten Zentrierflächen 26 an der Zentriersäule 22 zusammenwirken, um eine exakte und sichere Positionierung zu erreichen. Gleichfalls kann am Spannrahmenträger 20 oder am Spannrahmen 21 eine Spannrahmen-Verriegelungseinheit 27 vorgesehen ist, die den Spannrahmen 21 lösbar am Spannrahmenträger 20 fixiert. Die Spannrahmen-Verriegelungseinheit 27 kann beispielsweise als Spanneinheit der Firma Cytec Zylindertechnik ausgeführt sein, womit insbesondere auch spielfreie Verriegelungen möglich sind.

Durch die Zentriersäule 22 und/oder die Spannrahmen-Verriegelungseinheit 27 wird gleichzeitig sichergestellt, dass der Spannrahmen 21 mit dem Spannrahmenträger 20 mitbewegt wird, wenn der Zustellantrieb 8 aktiviert wird.

Mit dieser Ausführung kann eine Spannrahmen-Transporteinheit 6 standardisiert ausgeführt werden und kann durch verschiedene Spannrahmen 21 an unterschiedliche Anwendungen angepasst werden, ohne den Rest der Spannrahmen-Transporteinheit 6, insbesondere den Spannrahmenträger 20 und den Zustellantrieb 8, ändern oder wechseln zu müssen.

Der Spannrahmen 21 sollte in der Fügestation 2 in der Arbeitsposition A vorzugsweise exakt positioniert und fixiert werden, um eine hohe Fertigungstoleranz und Maßgenauigkeit erreichen zu können. Dazu ist in der Fügestation 2 eine ortsfeste Konstruktion 29 vorgesehen, an der zumindest eine Verriegelungseinheit 28 angeordnet ist, die mit einem Gegenverriegelungsteil 24 an der Spannrahmeneinheit 5 bzw. am Spannrahmen 21 zusammenwirkt. Damit wird die Spannrahmeneinheit 5 bzw. der Spannrahmen 21 in der Arbeitsposition A positionsgenau fixiert. Im Falle einer zweiteiligen Ausführung der Spannrahmeneinheit 5 wie oben erläutert, ist der Gegenverriegelungsteil 24 vorzugsweise am Spannrahmen 21 vorgesehen, da der Spannrahmen 21 positionsgenau angeordnet werden soll. Die Verriegelungseinheit 28 mit dem Gegenverriegelungsteil 24 kann beispielsweise wieder als Spanneinheit der Firma Cytec Zylindertechnik ausgeführt sein. Die Anordnung könnte auch umgekehrt sein, also Verriegelungseinheit 28 an der Spannrahmeneinheit 5 und Gegenverriegelungsteil 24 an der ortsfesten Konstruktion. Das würde allerdings den Aufwand erhöhen, da jede Spannrahmen-Transporteinheit 6 mit der betätigten und Energie für die Betätigung benötigenden Verriegelungseinheit 28 ausgeführt wäre.

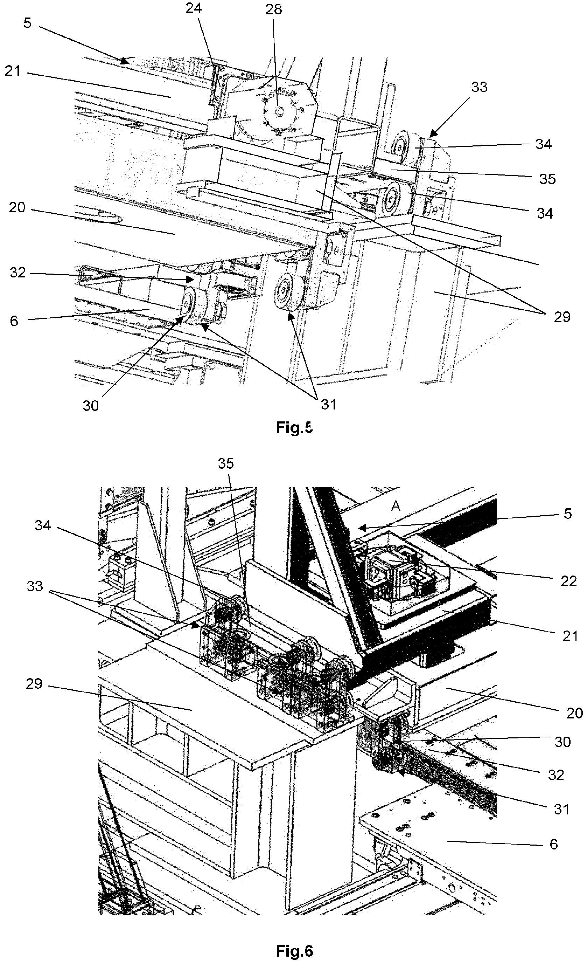

An der Spannrahmen-Transporteinheit 6 ist vorzugsweise eine erste Führungseinrichtung 30 zum Führen der Spannrahmeneinheit 5 in Querrichtung vorgesehen (Fig.5). Diese erste Führungseinrichtung 30 umfasst beispielsweise einen ersten Führungsteil 31, wie erste Führungsrollen, an der Spannrahmeneinheit 5 (oder am Spannrahmenträger 20), die mit einem zweiten Führungsteil 32, wie einer ersten Führungsschiene, an der Spannrahmen-Transporteinheit 6 zusammenwirken. Selbstverständlich könnte diese Anordnung auch umgekehrt sein, also erster Führungsteil 31 an der Spannrahmen-Transporteinheit 6 und zweiter Führungsteil 32 an der Spannrahmeneinheit 5 (oder am Spannrahmenträger 20). Damit werden die Gewichtskräfte der Spannrahmeneinheit 5 in der Bereitschaftsposition B und während der Bewegung in die Arbeitsposition A, oder von dieser zurück, über die Führungseinrichtung 30 aufgenommen bzw. in die Spannrahmen-Transporteinheit 6 abgeleitet. Der Zustellantrieb 8 beliebt dadurch praktisch unbelastet. Nachdem die erste Führungseinrichtung 30 Fertigungstoleranzen, Einstelltoleranzen und auch Verschleiß unterliegt, wäre praktisch jede Spannrahmen-Transporteinheit 6 verschieden und würde die Positionierung der Spannrahmeneinheit 5, bzw. des Spannrahmens 21, in der Arbeitsposition A beeinflussen. Um das zu verhindern, ist diese erste Führungseinrichtung 30 in der Arbeitsposition A vorteilhafterweise entkoppelt, d.h., dass der erste Führungsteil 31 und der zweite Führungsteil 32 nicht mehr zusammenwirken. Stattdessen ist in der Fügestation 2 eine ortsfeste zweite Führungseinrichtung 33 zum Führen der Spannrahmeneinheit 5 in Querrichtung vorgesehen (Fig.6), wobei die Spannrahmeneinheit 5 in der Arbeitsposition A ausschließlich in der zweiten Führungseinrichtung 33 geführt ist. Diese zweite Führungseinrichtung 33 umfasst beispielsweise einen dritten Führungsteil 34, wie zweite Führungsrollen, an einer ortsfesten Konstruktion 29 der Fügestation 2, die mit einem vierten Führungsteil 35, wie einer zweiten Führungsschiene, an der Spannrahmeneinheit 5 (oder am Spannrahmen 21 oder am Spannrahmenträger 20) zusammenwirken. Selbstverständlich könnte diese Anordnung auch umgekehrt sein, also dritter Führungsteil an der Spannrahmeneinheit 5 (oder am Spannrahmen 21 oder am Spannrahmenträger 20) und vierter Führungsteil an der Fügestation 2. Im Übergangsbereich zwischen Arbeitsposition A und Bereitschaftsposition B können auch die erste Führungseinrichtung 30 und zweite Führungseinrichtung 33 gleichzeitig in Eingriff sein, wobei in der Arbeitsposition A aber nur mehr die zweite Führungseinrichtung 33 im Eingriff ist.

In der Arbeitsposition A ist damit der dritte Führungsteil 34, beispielsweise die zweiten Führungsrollen, geometriebestimmend für alle Spannrahmen-Transporteinheiten 6, womit eine exaktere Positionierung des Spannrahmens 21 in der Arbeitsposition A, unabhängig von der Spannrahmen-Transporteinheit 6 erzielt werden kann.

Bis jetzt wurde nur eine Spannrahmen-Transporteinheit 6 an einer Seite (in Längsrichtung gesehenen) der Fügestation 2 beschrieben. Selbstverständlich sind vorteilhafterweise aber an beiden Seiten solche Spannrahmen-Transporteinheit 6 vorgesehen, die identisch aufgebaut sei können, um an beiden Seiten der Fahrzeugkarosserie 3 gleichzeitig fügen zu können. Die obigen Ausführungen gelten somit für beide Seiten gleichermaßen.

Wenn an beiden Seiten eine Spannrahmen-Transporteinheit 6 vorgesehen ist, ist vorzugsweise unterhalb der Fügestation 2 eine durchgehende ortsfeste Basiskonstruktion 12 (Fig.1) vorgesehen, die an beiden Seiten als ortsfeste Konstruktion 29 dient. Diese Basiskonstruktion 12 ist dabei so ausgeführt, dass die Fahrzeugkarosserie 3 oberhalb in Längsrichtung ungehindert transportiert oder positioniert werden kann. Der Spannrahmen 21 stützt sich in der Arbeitsposition A an der ortsfeste Konstruktion 29 ab und muss daher die wirkenden Kräfte und Momente aufnehmen bzw. ableiten. Durch diese Basiskonstruktion 12 als durchgehende ortsfeste Konstruktion 29 wird eine höhere Steifigkeit der Fügestation 2 erreicht, was sich wieder in einer höheren Positionsgenauigkeit beim Positionieren und Fügen der Fahrzeugkarosserie 3 niederschlägt. Außerdem werden dadurch auch mögliche Temperaturunterschiede an beiden Seiten der Fügestation 2 ausgeglichen, womit auch der Temperatureinfluss auf die Positionsgenauigkeit reduziert werden kann.

Die Spannrahmen 21 sind an den oberen Enden in den oben beschriebenen Ausgestaltungen in Querrichtung nicht miteinander verbunden, beispielsweise durch eine oder mehrere Querstreben, wie hinlänglich bekannt ist. Solche Querstreben bedingen weitere Stelle (neben der Positionierung der Spannrahmen 21) an denen Toleranzen eingehalten werden müssen, um die Querstreben positionieren und spannen zu können. Das erfordert eine aufwendigere, weil genauere Konstruktion im Bereich der Fügestation 2. Außerdem benötigen solche Querträger einen zusätzlichen Handhabungsschritt, um diese zu positionieren und zu verspannen. Jeweils eine Hälfte eines Querträgers an den Spannrahmen 21 anzuordnen und die Hälften in der Arbeitsposition A in der Mitte miteinander zu verbinden, ist ebenfalls bekannt. Das macht aber den Spannrahmen 21, bzw. die Spannrahmeneinheit 5, schwerer, größer und unhandlicher und ist daher ebenfalls nachteilig. Die beschriebene erfindungsgemäße Ausgestaltung der Fügestation 2 und der Spannrahmeneinheiten 5, bzw. der Spannrahmen 21, hat sich hingegen für die meisten Anwendungen als ausreichend steif herausgestellt, sodass eine zusätzliche Versteifung in Querrichtung der Spannrahmen 21 an den beiden Seiten der Förderstation 2 oftmals nicht notwendig ist. Falls für eine Anwendung doch eine solche Versteifung in Querrichtung notwendig sein sollte, kann diese in einer besonders vorteilhaften Ausgestaltung wie nachfolgend beschrieben ausgeführt werden. Diese Art der Querversteifung 50 wird als eigenständige Erfindung angesehen und kann auch in anderen Ausführungen einer Fügestation 2, beispielsweise nach dem eingangs beschriebenen Stand der Technik, eingesetzt werden.

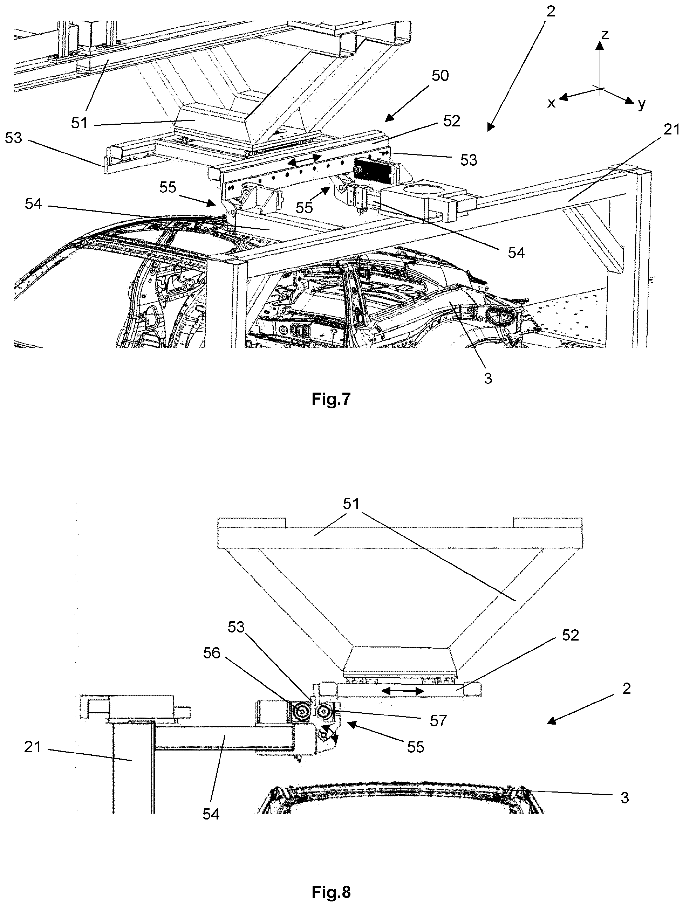

Oberhalb der Fügestation 2 ist hierfür eine ortsfeste Stützkonstruktion 51 vorgesehen, wie in Fig.7 und 8 dargestellt, die sich in der dargestellten Ausgestaltung nach unten in Richtung der Fügestation 2 erstreckt. Als Stützkonstruktion 51 kann auch die nachfolgend noch beschriebene Portalkonstruktion 40 genutzt werden. An der Stützkonstruktion 51 ist ein Koppelteil 52 angeordnet. Der Koppelteil 52 ist vorzugsweise in Längsrichtung gesehen mittig der Fügestation 2 angeordnet. Am Koppelteil 52 ist in Längsrichtung gesehen an zumindest einer Seite, vorzugsweise an beiden Seiten, ein erster Koppelführungsteil 53 angeordnet. Der Koppelführungsteil 53 ist in der gezeigten Ausgestaltung als Führungsschiene ausgeführt, die sich in Längsrichtung erstreckt. Am Spannrahmen 21 ist, vorzugsweise im Bereich des freien Endes des Spannrahmens 21, zumindest ein Versteifungsträger 54 angeordnet, der sich in Querrichtung ein Stück nach innen in Richtung zum Koppelteil 52 erstreckt. Am freien Ende des Versteifungsträgers 54 ist eine Versteifungs-Verriegelungseinheit 55 angeordnet, die mit dem Koppelführungsteil 53 zusammenwirkt. Die Versteifungs-Verriegelungseinheit 55 kann geöffnet werden, um die Spannrahmeneinheit 5 in der Arbeitsposition A ungehindert positionieren zu können. Danach kann die Versteifungs-Verriegelungseinheit 55 geschlossen werden, sodass diese in Eingriff mit dem Koppelführungsteil 53 gerät und eine Versteifung in Querrichtung herstellt.

Die Versteifungs-Verriegelungseinheit 55 könnte wiederum als Spanneinheit der Firma Cytec Zylindertechnik ausgeführt sein. In einer besonders vorteilhaften Ausgestaltung könnte die Versteifungs-Verriegelungseinheit 55 einen am Versteifungsträger 54 fest angeordneten ersten Verriegelungsteil 56, beispielsweise eine um eine Drehachse drehbar gelagerte Verriegelungsrolle, und einen am Versteifungsträger 54 schwenkbar angeordneten zweiten Verriegelungsteil 57, beispielsweise eine um eine Drehachse drehbar gelagert Verriegelungsrolle, umfassen. Durch das Verschwenken des zweiten Verriegelungsteils 57 kann die Versteifungs-Verriegelungseinheit 55 geöffnet und geschlossen werden. Im geschlossenen Zustand wird das Koppelführungsteil 53 zwischen den beiden Verriegelungsteilen 56, 57 geklemmt, wobei aber nachwievor eine Relativbewegung zwischen Koppelteil 52 und Spannrahmen 21 möglich sein soll. Im Falle von Verriegelungsrollen als Verriegelungsteilen 56, 57 ist die Drehachse der drehbar gelagerten Verriegelungsrollen natürlich in Längsrichtung ausgerichtet, was auf einfache Weise die Relativbewegung zwischen Koppelteil 52 und Spannrahmen 21 ermöglicht. Anstelle von Verriegelungsrollen könnte natürlich auch eine gleitende Führung, oder jede andere geeignete Führung, realisiert sein. Ebenso könnte anstelle einer Schwenkbewegung des zweiten Verriegelungsteils 57 auch eine andere Schließ- und Öffnungsbewegung vorgesehen sein. Der bewegliche Verriegelungsteil 57 der Versteifungs-Verriegelungseinheit 55 (z.B. die zweiten Verriegelungsrolle) ist dabei vorzugsweise näher zur Mitte der Fügestation 2 angeordnet, als der feststehende Verriegelungsteil 56 der Versteifungs-Verriegelungseinheit 55 (z.B. die erste Verriegelungsrolle), was die Positionierung des Spannrahmens 21 in der Arbeitsposition A erleichtert. Damit wird eine Versteifung in Querrichtung hergestellt, wobei aber trotzdem Ausgleichsbewegungen oder die Ableitung von Vibrationen in z-Richtung möglich sind. Durch diese Ausführung sind die Toleranzanforderungen zur Herstellung der Querversteifung gering und geraten nicht in Konflikt mit den Toleranzanforderungen der Positionierung des Spannrahmens 21 in der Fügestation 2.

Der Koppelteil 52 könnte zusätzlich auch relativ zur Stützkonstruktion 51 in Längsrichtung (x-Richtung) verschiebbar angeordnet sein (angedeutet durch den Doppelpfeil in Fig.7). Der Koppelteil 52 könnte dazu beispielsweise als x-Schlitten ausgeführt sein, der eine Längsbewegung ermöglicht. Das ermöglicht eine Ausgleichsbewegung und das Ableiten von Vibrationen in Längsrichtung.

Wenn an beiden Seiten der Fügestation 2 Spannrahmen 21vorgesehen sind, könnte der Koppelteil 52 relativ zur Stützkonstruktion 51 in Querrichtung verschiebbar angeordnet sein (angedeutet durch den Doppelpfeil in Fig.8). Der Koppelteil 52 könnte dazu beispielsweise als y-Schlitten ausgeführt sein, der eine Querbewegung ermöglicht. Das ermöglicht eine automatische Zentrierung der Spannrahmens 21 an beiden Seiten, bei gleichzeitiger Versteifung der beiden Spannrahmen 21 in Querrichtung. Außerdem sind damit auch Ausgleichsbewegungen und das Ableiten von Vibrationen in Querrichtung möglich.

Bevorzugt ist der Koppelteil 52 als x-y-Schlitten ausgeführt und damit sowohl in Längsrichtung, als auch in Querrichtung relativ zur Stützkonstruktion 51 bewegbar gelagert.

Für eine hohe Fertigungsflexibilität ist in der Fügeanlage 1 vorteilhafterweise ein Spannrahmenwechsel vorgesehen. Im einfachsten Fall könnte die Spannrahmeneinheit 5 ausgetauscht werden. Das würde allerdings bedingen, dass der Zustellantrieb 8 für den Spannrahmenwechsel zuerst entkoppelt werden müsste, was zwar möglich wäre, aber den Aufwand erhöhen würde. Daher ist die Ausführung der Spannrahmeneinheit 5 mit Spannrahmenträger 20 und darauf lösbar angeordneten Spannrahmen 21 besonders vorteilhaft. Für einen Spannrahmenwechsel muss dabei lediglich die Spannrahmen-Verriegelungseinheit 27 gelöst werden (falls vorhanden), womit der Spannrahmen 21 einfach entfernt werden kann und ein anderer Spannrahmen 21 am Spannrahmenträger 20 angeordnet werden kann. Der Spannrahmenwechsel kann dabei im einfachsten Fall in der Bereitschaftsposition B erfolgen.

Ein vorteilhafter Spannrahmenwechsel kann realisiert werden, wenn an einer Seite der Fügestation 2 zwei Spannrahmen-Transporteinheiten 6, 6a vorgesehen sind, die in Längsrichtung zwischen der Bereitschaftsposition B und einer ersten Wechselposition W1, bzw. zweiten Wechselposition W2, bewegbar sind (Fig.1). Die erste Wechselposition W1 ist dabei in Fertigungsrichtung gesehen stromabwärts der Fügestation 2 (also auf der Seite, an der die gefügte Fahrzeugkarosserie 3 die Fügestation 2 verlässt) und die zweite Wechselposition W2 stromaufwärts der Fügestation 2. Damit kann immer eine der beiden Spannrahmen-Transporteinheit 6 im Bereich der Fügestation 2 angeordnet sein und zwischen der Bereitschaftsposition B und der Arbeitsposition A im Takt der Fertigung hin und her bewegt werden. Die andere Spannrahmen-Transporteinheit 6a befindet sich in einer der beiden Wechselpositionen W1, w2 und kann in der Zwischenzeit mit dem Spannrahmen 21a bestückt werden, der für den nächsten zu fertigenden Typ an Fahrzeugkarosserie 3 benötigt wird. Die Spannrahmen-Transporteinheit 6 mit dem momentan nicht benötigten Spannrahmen 21 kann dann nach dem Fügen aus der Bereitschaftsposition B in eine freie Wechselposition W1, W2 gefahren werden und die vorbereitete Spannrahmen-Transporteinheit 6a mit dem benötigten Spannrahmen 21a wird gleichzeitig in die Bereitschaftsposition B gefahren.

Die Spannrahmen 21, 21 können dabei im Prinzip auf beliebige Weise zur Spannrahmen-Transporteinheit 6, 6a, oder von dieser weg, gefördert werden. Eine Möglichkeit wäre das

Vorsehen eines geeigneten Roboters, der Spannrahmen 21, 21a aus einem Spannrahmenmagazin entnimmt oder in dieses ablegt. Eine andere Möglichkeit ist eine geeignete Fördereinrichtung, die ebenfalls Spannrahmen 21, 21a aus einem Spannrahmenmagazin entnimmt oder in dieses ablegt. Eine besonders vorteilhafte Ausgestaltung einer solchen Fördereinrichtung wird nachfolgend beschrieben.

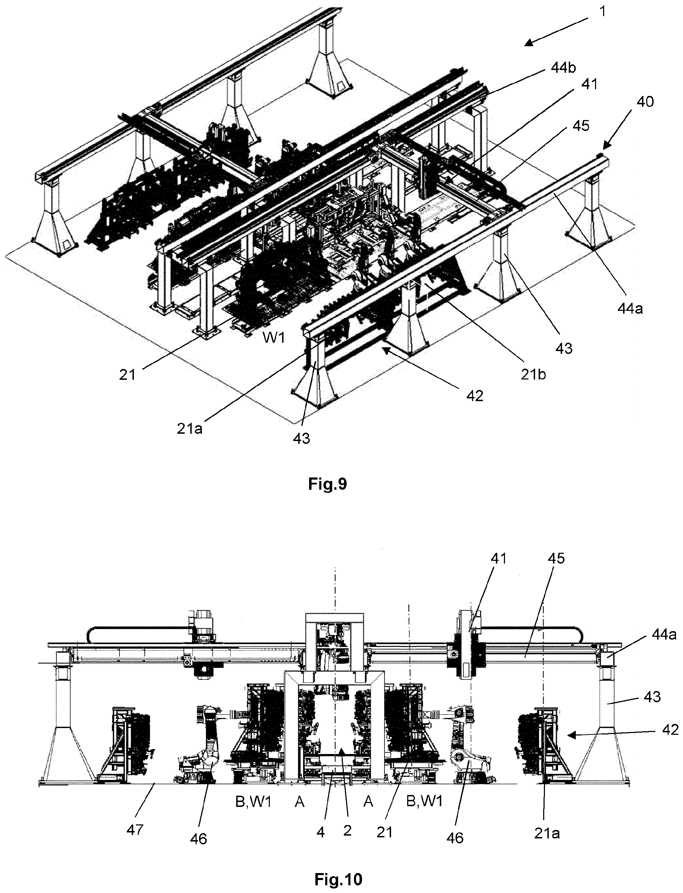

Die Fördereinrichtung besteht in dieser Ausgestaltung aus einer Portalkonstruktion 40 mit einen daran beweglich angeordneten Portalmanipulator 41 (Fig.9). Das wird nachfolgend wieder für eine Seite der Fügestation 2 beschrieben, wobei die Ausführungen aber selbstverständlich ebenso wieder für eine beidseitige Anordnung gelten. In der Fügeanlage 1 ist zumindest ein Spannrahmenmagazin 42 vorgesehen, in dem zumindest ein Spannrahmen 21a abgelegt werden kann. Die Portalkonstruktion 40 überspannt dabei vorzugsweise an einer Seite die Bereitschaftsposition B, oder die vorgesehene Wechselposition W1 falls vorhanden, und das Spannrahmenmagazin 42, bzw. vorzugsweise alle auf einer Seite vorgesehenen Spannrahmenmagazine. Damit ist der Portalmanipulator 41 in der Lage alle Spannrahmen 21, 21a der Seite an jeder Position zu erreichen. Die Portalkonstruktion 40 besteht beispielswiese aus einer Anzahl von Portalsäulen 43, die am Boden 47 befestigt sind, und diese am oberen freien Ende verbindende Längsträger 44a, 44b. Der Portalmanipulator 41 ist vorzugsweise auf einem Querträger 45 angeordnet und kann entlang des Querträgers 45 in Querrichtung (y-Richtung) bewegt werden. Der Querträger 45 ist vorzugsweise zwischen den beiden Längsträgern 44a, 44b in Längsrichtung (x-Richtung) verschiebbar angeordnet. Zusätzlich kann der Portalmanipulator 41 auf und ab (z-Richtung) bewegt werden. Damit wird durch diese Portalkonstruktion 40 mit Portalmanipulator 41 ein 3-Achs Manipulator realisiert. Selbstverständlich sind Adaptionen denkbar. Beispielsweise könnten an einer Seite mehrere Portalmanipulatoren 41 vorgesehen sein. Auch die Portalkonstruktion selbst und Anordnung der Portalsäulen 43, sowie der Längsträger 44a, 44b könnte anders ausgeführt sein. Entscheidend ist lediglich, dass ein Portalmanipulator 41 zumindest ein Spannrahmenmagazin 42 und zumindest die Bereitschaftsposition B und/oder zumindest eine Wechselposition W1 erreichen kann.

Zum Spannrahmenwechsel kann der Portalmanipulator 41 einen nicht mehr benötigten Spannrahmen 21 aus der Bereitschaftsposition B oder einer Wechselposition W1 aufnehmen. Dazu kann der Portalmanipulator 41 in z-Richtung zur Aufnahmen abgesenkt werden und der ergriffene Spannrahmen 21 wird nachfolgend vom Portalmanipulator 41 vom Spannrahmenträger 20 abgehoben. Der Portalmanipulator 41 bewegt den Spannrahmen 21 dann an einen freien Speicherplatz des Spannrahmenmagazins 42. Danach ergreift der Portalmanipulator 41 den benötigten Spannrahmen 21a aus einem anderen Speicherplatz eines erreichbaren Spannrahmenmagazins 42 und fördert den neuen Spannrahmen 21a in die Bereitschaftsposition B oder in eine Wechselposition W1, in der sich ein freier Spannrahmenträger 20 einer Spannrahmen-Transporteinheit 6 befindet, auf dem der neue Spannrahmen 21a abgelegt wird. Danach kann der neue Spannrahmen 21a mit der Spannrahmen-Transporteinheit 6 gegebenenfalls in die Bereitschaftsposition B gefahren werden.

In der Fig.10 ist eine Seitenansicht der Fügeanlage 1 mit Portalkonstruktion 40 und Portalmanipulator 41 dargestellt. Darin sind beispielsweise auch die Roboter 46 gezeigt, die die Fügewerkzeuge zum Fügen tragen.

Der Vorteil dieser Portalkonstruktion 40 liegt darin, dass die einzelnen Spannrahmen 21, 21a, insbesondere die in den Spannrahmenmagazinen 42 angeordneten, immer gut zugänglich sind, vor allem, weil dadurch auch der Bodenbereich frei bleibt. Damit können einfach Wartungsarbeiten an den Spannrahmen 21, 21a durchgeführt werden. Außerdem benötigt diese Portalkonstruktion 40 nur sehr wenig Bauhöhe, im Wesentlichen nicht viel mehr als die Höhe der Fügestation 2, womit auch die Anforderung an die Fertigungshalle deutlich niedrige sind, als bei vergleichbaren Fügeanlagen. Nicht zuletzt kann die Fügeanlage 1 auch sehr flexibel und sehr platzsparend um weitere Spannrahmen 21, und damit um weitere Typen an Fahrzeugkarosserien, erweitert werden.

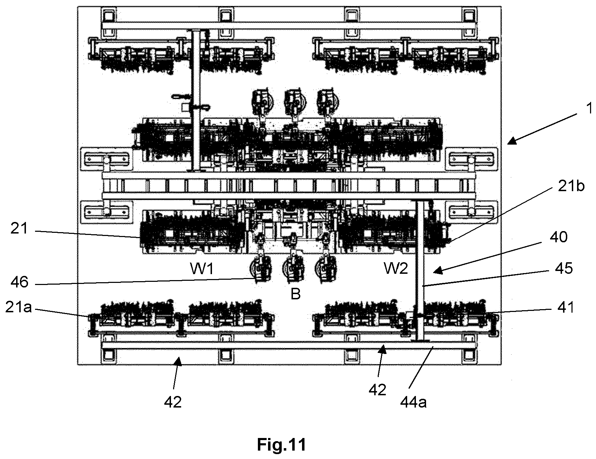

Im Ausführungsbeispiel der Fig.9 können beispielsweise drei verschiedene Spannrahmen 21, 21a, 21b eingesetzt werden (z.B. zwei Spannrahmen auf zwei Spannrahmen-Transporteinheiten im Bereich der Fügestation 2 und ein Spannrahmen in zwei verfügbaren Speicherplätzen eines Spannrahmenmagazins 42). Im Beispiel nach Fig.11 wären es schon fünf verschiedene Spannrahmen 21, 21a, 21b (z.B. zwei Spannrahmen auf zwei Spannrahmen-Transporteinheiten im Bereich der Fügestation und drei Spannrahmen in vier verfügbaren Speicherplätzen eines Spannrahmenmagazins 42). Der Erweiterung sind dabei praktisch keine Grenzen gesetzt, wobei natürlich auch weniger als drei, und auch mehr als fünf, verschiedene Spannrahmen denkbar sind. Auch die Ausführung des Spannrahmenmagazins 42 ist praktisch beliebig, wobei das Spannrahmenmagazin 42 vorteilhafterweise nicht höher bauen sollte, als die Fügestation 2.

Anstelle der Spannrahmen 21, 21a, 21b könnte mit der Portalkonstruktion auch eine Spannrahmeneinheit 5 zum Spannrahmenwechsel bewegt werden, wie oben beschrieben.

Vorhandene Sensoren, Aktuatoren und Steuereinheiten, beispielsweise zum Steuern der Fügeanlage 1, der Fügestation 2 und der Roboter 46, sind aus Gründen der Übersichtlichkeit nicht dargestellt, aber hinlänglich bekannt. Ebenso sind Methoden zum Steuern solcher Fügeanlagen 1 bekannt, insbesondere auch um einen beliebigen Karosserietypenmix in der Fügeanlage 1 fertigen zu können.

## Patentansprüche

1. Fügeanlage mit einer Fügestation (2), in der in Längsrichtung gesehen an zumindest einer Seite eine Spannrahmeneinheit (5) angeordnet ist, die einen Spannrahmen (21) umfasst, wobei die Spannrahmeneinheit (5) auf einer in Längsrichtung bewegbaren Spannrahmen-Transporteinheit (6) angeordnet ist und die Spannrahmeneinheit (5) auf der Spannrahmen-Transporteinheit (6) in Querrichtung und relativ zur Spannrahmen-Transporteinheit (6) zwischen einer Arbeitsposition (A) und einer Bereitschaftsposition (B) bewegbar angeordnet ist, wobei auf der Spannrahmen-Transporteinheit (6) ein Zustellantrieb (8) vorgesehen ist, der die Spannrahmeneinheit (5) zwischen der Arbeitsposition (A) und der Bereitschaftsposition (B) bewegt, **dadurch gekennzeichnet, dass** an der Spannrahmen-Transporteinheit (6) eine erste Führungseinrichtung (30) zum Führen der Spannrahmeneinheit (5) in Querrichtung vorgesehen ist und in der Fügestation (2) eine ortsfeste zweite Führungseinrichtung (33) zum Führen der Spannrahmeneinheit (5) in Querrichtung vorgesehen ist, wobei die Spannrahmeneinheit (5) in der Arbeitsposition (A) ausschließlich in der zweiten Führungseinrichtung (33) geführt ist.

2. Fügeanlage nach Anspruch 1, **dadurch gekennzeichnet, dass** in der Fügestation (2) zumindest eine Verriegelungseinheit (28) angeordnet ist, die mit einem Gegenverriegelungsteil (24) an der Spannrahmeneinheit (5) zur positionsgenauen Fixierung des Spannrahmens (21) in der Arbeitsposition (A) zusammenwirkt.

3. Fügeanlage nach Anspruch 1 oder 2, **dadurch gekennzeichnet, dass** die Spannrahmeneinheit (5) einen Spannrahmenträger (20) umfasst, auf dem der Spannrahmen (21) lösbar angeordnet ist.

4. Fügeanlage nach Anspruch 3, **dadurch gekennzeichnet, dass** am Spannrahmenträger (20) zumindest eine Zentriersäule (22) angeordnet ist und am Spannrahmen (21) zumindest eine Zentrierausnehmung (23) vorgesehen ist, wobei die Zentriersäule (22) in die Zentrierausnehmung (23) eingreift.

5. Fügeanlage nach Anspruch 3 oder 4, **dadurch gekennzeichnet, dass** eine Spannrahmen-Verriegelungseinheit (27) vorgesehen ist, die den Spannrahmen (21) lösbar am Spannrahmenträger (20) fixiert.

6. Fügeanlage nach einem der Ansprüche 1 bis 5, **dadurch gekennzeichnet, dass** die erste Führungseinrichtung (30) durch einen ersten Führungsteil (31) an der Spannrahmeneinheit (5) oder der Spannrahmen-Transporteinheit (6) und einem damit zusammenwirkenden zweiten Führungsteil (32) an der Spannrahmen-Transporteinheit (6) oder der Spannrahmeneinheit (5) ausgebildet ist.

7. Fügeanlage nach einem der Ansprüche 1 bis 6, **dadurch gekennzeichnet, dass** die zweite Führungseinrichtung (33) durch einen dritten Führungsteil (34) an der Fügestation (2) oder der Spannrahmeneinheit (5) und einem damit zusammenwirkenden vierten Führungsteil (35) an der Spannrahmeneinheit (6) oder der Fügestation (2) ausgebildet ist.

8. Fügeanlage nach einem der Ansprüche 1 bis 7, **dadurch gekennzeichnet, dass** an beiden Seiten der Fügestation (2) eine Spannrahmen-Transporteinheit (6) mit einer Spannrahmeneinheit (5) mit Spannrahmen (21) vorgesehen ist, wobei unterhalb der Fügestation (2) eine ortsfeste Basiskonstruktion (12) angeordnet ist und an beiden Seiten an der ortsfesten Basiskonstruktion (12) je zumindest eine Verriegelungseinheit (28) vorgesehen ist, die jeweils mit einem Gegenverriegelungsteil (24) an der Spannrahmeneinheit (5) zur positionsgenauen Fixierung des jeweiligen Spannrahmens (21) in der Arbeitsposition (A) zusammenwirkt.

9. Fügeanlage nach einem der Ansprüche 1 bis 8, **dadurch gekennzeichnet, dass** in der Fügeanlage (1) zumindest ein Spannrahmenmagazin (42) für eine Spannrahmeneinheit (5) oder einen Spannrahmen (21) vorgesehen ist und in der Fügeanlage (1) eine Portalkonstruktion (40) mit einen daran beweglich angeordneten Portalmanipulator (41) angeordnet ist, wobei mit dem Portalmanipulator (41) zum Spannrahmenwechsel eine Spannrahmeneinheit (5) oder ein Spannrahmen (21) zwischen dem Spannrahmenmagazin (42) und einer Spannrahmen-Transporteinheit (6) bewegbar ist.

10. Fügeanlage nach Anspruch 9, **dadurch gekennzeichnet, dass** die Spannrahmen-Transporteinheit (6) zwischen der Bereitschaftsposition (B) und einer Wechselposition (W1, W2) bewegbar ist und der Portalmanipulator (41) die Spannrahmeneinheit (5) oder den Spannrahmen (21) zwischen dem Spannrahmenmagazin (42) und der Wechselposition (W1, W2) bewegt.

11. Fügeanlage nach Anspruch 10, **dadurch gekennzeichnet, dass** eine weitere Spannrahmen-Transporteinheit (6a) mit einem weiteren Spannrahmen (21a) von einer weiteren Wechselposition (W1, W2) in die Bereitschaftsposition (B) bewegbar ist.

12. Spannrahmen-Transporteinheit auf der eine Spannrahmeneinheit (5) angeordnet ist, die einen Spannrahmen (21) umfasst, und die Spannrahmeneinheit (5) auf der Spannrahmen-Transporteinheit (6) relativ zur Spannrahmen-Transporteinheit (6) bewegbar angeordnet ist, wobei auf der Spannrahmen-Transporteinheit (6) ein Zustellantrieb (8) vorgesehen ist, der die Spannrahmeneinheit (5) bewegt, **dadurch gekennzeichnet, dass** an der Spannrahmen-Transporteinheit (6) eine erste Führungseinrichtung (30) zum Führen der Spannrahmeneinheit (5) in Querrichtung vorgesehen ist, wobei die Spannrahmeneinheit (5) im voll ausgefahrenen Zustand entkoppelt von der ersten Führungseinrichtung (30) ist.

13. Spannrahmen-Transporteinheit nach Anspruch 12, **dadurch gekennzeichnet, dass** an der Spannrahmeneinheit (5) ein Gegenverriegelungsteil (24) vorgesehen ist.

14. Spannrahmen-Transporteinheit nach Anspruch 12 oder 13, **dadurch gekennzeichnet, dass** die Spannrahmeneinheit (5) einen Spannrahmenträger (20) umfasst, auf dem der Spannrahmen (21) lösbar angeordnet ist.

15. Spannrahmen-Transporteinheit nach Anspruch 14, **dadurch gekennzeichnet, dass** am Spannrahmenträger (20) zumindest eine Zentriersäule (22) angeordnet ist und am Spannrahmen (21) zumindest eine Zentrierausnehmung (23) vorgesehen ist, wobei die Zentriersäule (22) in die Zentrierausnehmung (23) eingreift.

16. Spannrahmen-Transporteinheit nach Anspruch 14 oder 15, **dadurch gekennzeichnet, dass** eine Spannrahmen-Verriegelungseinheit (27) vorgesehen ist, die den Spannrahmen (21) lösbar am Spannrahmenträger (20) fixiert.

17. Spannrahmen-Transporteinheit nach einem der Ansprüche 12 bis 16, **dadurch gekennzeichnet,** dassdie erste Führungseinrichtung (30) durch einen ersten Führungsteil (31) an der Spannrahmeneinheit (5) oder der Spannrahmen-Transporteinheit (6) und einem damit zusammenwirkenden zweiten Führungsteil (32) an der Spannrahmen-Transporteinheit (6) oder der Spannrahmeneinheit (5) ausgebildet ist.

## Claims

1. Joining system comprising a joining station (2) in which, viewed in the longitudinal direction, a clamping frame unit (5) is arranged on at least one side, which clamping frame unit (5) comprises a clamping frame (21), the clamping frame unit (5) being arranged on a clamping frame transport unit (6) that is movable in the longitudinal direction and the clamping frame unit (5) being arranged on the clamping frame transport unit (6) so as to be moveable in the transverse direction and relative to the clamping frame transport unit (6) between a working position (A) and a standby position (B), a feed drive (8) being provided on the clamping frame transport unit (6), which feed drive moves the clamping frame unit (5) between the working position (A) and the standby position (B), **characterized in that** a first guide device (30) is provided on the clamping frame transport unit (6) for guiding the clamping frame unit (5) in the transverse direction and a stationary second guide device (33) is provided in the joining station (2) for guiding the clamping frame unit (5) in the transverse direction, the clamping frame unit (5), in the working position (A), being guided exclusively in the second guide device (33).

2. Joining system according to claim 1, **characterized in that** at least one locking unit (28) is arranged in the joining station (2), which locking unit interacts with a counter locking part (24) on the clamping frame unit (5) in order to precisely fix the position of the clamping frame (21) in the working position (A).

3. Joining system according to claim 1 or claim 2, **characterized in that** the clamping frame unit (5) comprises a clamping frame support (20) on which the clamping frame (21) is detachably arranged.

4. Joining system according to claim 3, **characterized in that** at least one centering column (22) is arranged on the clamping frame support (20) and at least one centering recess (23) is provided in the clamping frame (21), the centering column (22) engaging in the centering recess (23).

5. Joining system according to claim 3 or claim 4, **characterized in that** a clamping frame locking unit (27) is provided which detachably fixes the clamping frame (21) on the clamping frame support (20).

6. Joining system according to any of claims 1 to 5, **characterized in that** the first guide device (30) is formed by a first guide part (31) on the clamping frame unit (5) or the clamping frame transport unit (6) and a second guide part (32) interacting therewith on the clamping frame transport unit (6) or the clamping frame unit (5).

7. Joining system according to any of claims 1 to 6, **characterized in that** the second guide device (33) is formed by a third guide part (34) on the joining station (2) or the clamping frame unit (5) and a fourth guide part (35) interacting therewith on the clamping frame unit (6) or the joining station (2).

8. Joining system according to any of claims 1 to 7, **characterized in that** a clamping frame transport unit (6) comprising a clamping frame unit (5) having a clamping frame (21) is provided on both sides of the joining station (2), a stationary base structure (12) being arranged below the joining station (2) and at least one locking unit (28) being provided on each side of the stationary base structure (12), each of which locking units interacts with a counter locking part (24) on the clamping frame unit (5) in order to precisely fix the position of the relevant clamping frame (21) in the working position (A).

9. Joining system according to any of claims 1 to 8, **characterized in that** at least one clamping frame magazine (42) for a clamping frame unit (5) or a clamping frame (21) is provided in the joining system (1) and a gantry structure (40) having a gantry manipulator (41) movably arranged thereon is arranged in the joining system (1), a clamping frame unit (5) or a clamping frame (21) being movable between the clamping frame magazine (42) and a clamping frame transport unit (6) by means of the gantry manipulator (41) in order to change the clamping frame.

10. Joining system according to claim 9, **characterized in that** the clamping frame transport unit (6) is movable between the standby position (B) and a change position (W1, W2) and the gantry manipulator (41) moves the clamping frame unit (5) or the clamping frame (21) between the clamping frame magazine (42) and the change position (W1, W2).

11. Joining system according to claim 10, **characterized in that** a further clamping frame transport unit (6a) having a further clamping frame (21a) is movable from a further change position (W1, W2) to the standby position (B).

12. Clamping frame transport unit on which a clamping frame unit (5) is arranged, which comprises a clamping frame (21), and the clamping frame unit (5) is arranged on the clamping frame transport unit (6) so as to be movable relative to the clamping frame transport unit (6), a feed drive (8) being provided on the clamping frame transport unit (6), which feed drive moves the clamping frame unit (5), **characterized in that** a first guide device (30) is provided on the clamping frame transport unit (6) for guiding the clamping frame unit (5) in the transverse direction, the clamping frame unit (5), in the fully extended state, being decoupled from the first guide device (30).

13. Clamping frame transport unit according to claim 12, **characterized in that** a counter locking part (24) is provided on the clamping frame unit (5).

14. Clamping frame transport unit according to claim 12 or claim 13, **characterized in that** the clamping frame unit (5) comprises a clamping frame support (20) on which the clamping frame (21) is detachably arranged.

15. Clamping frame transport unit accord^^ing to claim 14, **characterized in that** at least one centering column (22) is arranged on the clamping frame support (20) and at least one centering recess (23) is provided in the clamping frame (21), the centering column (22) engaging in the centering recess (23).

16. Clamping frame transport unit according to claim 14 or claim 15, **characterized in that** a clamping frame locking unit (27) is provided which detachably fixes the clamping frame (21) on the clamping frame support (20).

17. Clamping frame transport unit according to any of claims 12 to 16, **characterized in that** the first guide device (30) is formed by a first guide part (31) on the clamping frame unit (5) or the clamping frame transport unit (6) and a second guide part (32) interacting therewith on the clamping frame transport unit (6) or the clamping frame unit (5).

## Revendications

1. Installation d'assemblage comportant un poste d'assemblage (2) dans lequel, vu dans la direction longitudinale, est disposée une unité de cadre de serrage (5) sur au moins un côté, laquelle comprend un cadre de serrage (21), l'unité de cadre de serrage (5) étant disposée sur une unité de transport de cadre de serrage (6) mobile dans la direction longitudinale et l'unité de cadre de serrage (5) étant disposée sur l'unité de transport de cadre de serrage (6) dans la direction transversale et mobile par rapport à l'unité de transport de cadre de serrage (6) entre une position de travail (A) et une position d'attente (B), un entraînement d'avance (8) étant prévu sur l'unité de transport de cadre de serrage (6), lequel déplace l'unité de cadre de serrage (5) entre la position de travail (A) et la position d'attente (B), **caractérisée en ce qu'**un premier dispositif de guidage (30) permettant le guidage de l'unité de cadre de serrage (5) dans la direction transversale est prévu au niveau de l'unité de transport de cadre de serrage (6) et qu'un second dispositif de guidage fixe (33) permettant le guidage de l'unité de cadre de serrage (5) dans la direction transversale est prévu dans le poste d'assemblage (2), l'unité de cadre de serrage (5) étant guidée, dans la position de travail (A), exclusivement dans le second dispositif de guidage (33).

2. Installation d'assemblage selon la revendication 1, **caractérisée en ce qu'**au moins une unité de verrouillage (28) est disposée dans le poste d'assemblage (2), laquelle coopère avec une pièce de contre-verrouillage (24) au niveau de l'unité de cadre de serrage (5) pour la fixation précise en position du cadre de serrage (21) dans la position de travail (A).

3. Installation d'assemblage selon l'une des revendications 1 à 2, **caractérisée en ce que** l'unité de cadre de serrage (5) comprend un support de cadre de serrage (20) sur lequel est disposé de manière amovible le cadre de serrage (21).

4. Installation d'assemblage selon la revendication 3, **caractérisée en ce qu'**au moins une colonne de centrage (22) est disposée au niveau du support de cadre de serrage (20) et **en ce qu'**au moins un évidement de centrage (23) est prévu au niveau du cadre de serrage (21), la colonne de centrage (22) venant en prise dans l'évidement de centrage (23).

5. Installation d'assemblage selon la revendication 3 ou 4, **caractérisée en ce qu'**une unité de verrouillage de cadre de serrage (27) est prévue, laquelle fixe de manière amovible le cadre de serrage (21) au support de cadre de serrage (20).

6. Installation d'assemblage selon l'une des revendications 1 à 5, **caractérisée en ce que** le premier dispositif de guidage (30) est réalisé par une première pièce de guidage (31) au niveau de l'unité de cadre de serrage (5) ou de l'unité de transport de cadre de serrage (6) et par une deuxième pièce de guidage (32) coopérant avec la première pièce de guidage au niveau de l'unité de transport de cadre de serrage (6) ou de l'unité de cadre de serrage (5).

7. Installation d'assemblage selon l'une des revendications 1 à 6, **caractérisée en ce que** le second dispositif de guidage (33) est réalisé par une troisième pièce de guidage (34) au niveau du poste d'assemblage (2) ou de l'unité de cadre de serrage (5) et par une quatrième pièce de guidage (35) coopérant avec la troisième pièce de guidage au niveau de l'unité de cadre de serrage (6) ou du poste d'assemblage (2).

8. Installation d'assemblage selon l'une des revendications 1 à 7, **caractérisée en ce qu'**une unité de transport de cadre de serrage (6) comportant une unité cadre de serrage (5) pourvue d'un cadre de serrage (21) est prévue des deux côtés du poste d'assemblage (2), une structure de base (12) fixe étant disposée au-dessous du poste d'assemblage (2) et au moins une unité de verrouillage (28) étant respectivement prévue sur les deux côtés de la structure de base (12) fixe, laquelle unité de verrouillage coopère avec une pièce de contre-verrouillage (24) au niveau de l'unité de cadre de serrage (5) pour la fixation précise en position du cadre de serrage (21) respectif dans la position de travail (A).

9. Installation d'assemblage selon l'une des revendications 1 à 8, **caractérisée en ce que,** dans l'installation d'assemblage (1), au moins un magasin de cadre de serrage (42) est prévu pour une unité de cadre de serrage (5) ou un cadre de serrage (21) et **en ce qu'**une structure à portique (40) comportant un manipulateur à portique (41) y étant disposé mobile est disposée dans l'installation d'assemblage (1), une unité de cadre de serrage (5) ou un cadre de serrage (21) pouvant être déplacé entre le magasin de cadre de serrage (42) et une unité de transport de cadre de serrage (6) au moyen du manipulateur à portique (41) afin de changer le cadre de serrage.

10. Installation d'assemblage selon la revendication 9, **caractérisée en ce que** l'unité de transport de cadre de serrage (6) peut être déplacée entre la position d'attente (B) et une position de changement (W1, W2) et **en ce que** le manipulateur à portique (41) déplace l'unité de cadre de serrage (5) ou le cadre de serrage (21) entre le magasin de cadre de serrage (42) et la position de changement (W1, W2).

11. Installation d'assemblage selon la revendication 10, **caractérisée en ce qu'**une autre unité de transport de cadre de serrage (6a), laquelle comporte un autre cadre de serrage (21a), peut être déplacée d'une autre position de changement (W1, W2) dans la position d'attente (B).

12. Unité de transport de cadre de serrage sur laquelle est disposée une unité de cadre de serrage (5), laquelle comprend un cadre de serrage (21), et l'unité de cadre de serrage (5) étant disposée mobile sur l'unité de transport de cadre de serrage (6) par rapport à l'unité de transport de cadre de serrage (6), un entraînement d'avance (8) étant prévu sur l'unité de transport de cadre de serrage (6), lequel déplace l'unité de cadre de serrage (5), **caractérisée en ce qu'un** premier dispositif de guidage (30) permettant le guidage de l'unité de cadre de serrage (5) dans la direction transversale est prévu au niveau de l'unité de transport de cadre de serrage (6), l'unité de cadre de serrage (5) étant découplée du premier dispositif de guidage (30) à l'état complètement déployé.

13. Unité de transport de cadre de serrage selon la revendication 12, **caractérisée en ce qu'**une pièce de contre-verrouillage (24) est prévue au niveau de l'unité de cadre de serrage (5).

14. Unité de transport de cadre de serrage selon la revendication 12 ou 13, **caractérisée en ce que** l'unité de cadre de serrage (5) comprend un support de cadre de serrage (20) sur lequel est disposé de manière amovible le cadre de serrage (21).

15. Unité de transport de cadre de serrage selon la revendication 14, **caractérisée en ce qu'**au moins une colonne de centrage (22) est disposée au niveau du support de cadre de serrage (20) et **en ce qu'**au moins un évidement de centrage (23) est prévu au niveau du cadre de serrage (21), la colonne de centrage (22) venant en prise dans l'évidement de centrage (23).

16. Unité de transport de cadre de serrage selon la revendication 14 ou 15, **caractérisée en ce qu'**une unité de verrouillage de cadre de serrage (27) est prévue, laquelle fixe de manière amovible le cadre de serrage (21) au support de cadre de serrage (20).

17. Unité de transport de cadre de serrage selon l'une des revendications 12 à 16, **caractérisée en ce que** le premier dispositif de guidage (30) est réalisé par une première pièce de guidage (31) au niveau de l'unité de cadre de serrage (5) ou de l'unité de transport de cadre de serrage (6) et par une deuxième pièce de guidage (32) coopérant avec la première pièce de guidage au niveau de l'unité de transport de cadre de serrage (6) ou de l'unité de cadre de serrage (5).
